Europäisches Patentamt

European Patent Office

Office européen des brevets

(19)

(11) Publication number: **0 446 507 A1**

# EUROPEAN PATENT APPLICATION

(21) Application number: **90302743.1**

(22) Date of filing: **14.03.90**

(51) Int. Cl.5: **G01F 15/18**

(43) Date of publication of application:
**18.09.91 Bulletin 91/38**

(84) Designated Contracting States:
**BE DE FR NL**

(71) Applicant: **Evans, Gerald John
Shortlands 22 Cambridge Road
Clevedon Avon BS21 7DN(GB)**

(72) Inventor: **Evans, Gerald John
Shortlands 22 Cambridge Road
Clevedon Avon BS21 7DN(GB)**

(74) Representative: **Calderbank, Thomas Roger et al
MEWBURN ELLIS 2 Cursitor Street
London EC4A 1BQ(GB)**

(54) **Assembly for controlling and/or metering a fluid flow.**

(57) A manifold (22), generally including a control valve (100) and a seat for a water meter (36), has a flow inlet (24) and outlet (25) opening beneath it so that it is mountable on a platform (2) with complementary flow ways (7). The platform (2) may be mountable in a lined chamber (13-18) in the ground, e.g. by frictional engagement of peripheral serrations (20) or by engaging shoulders (12) between courses of the lining. The platform (2) can be installed at any required height.

Fig. 1.

EP 0 446 507 A1

The present invention relates to an assembly for controlling and/or metering a fluid flow. It particularly relates to an assembly for installation in a cavity in the ground. It is mainly, but not exclusively, concerned with assemblies which include, or are intended to be coupled to, water meters.

My U.K. patent specification GB-A-2210465 illustrates a meter manifold (a platform which supports a meter and also includes valve means) mounted on pillars that rise from a base which sits at the bottom of the cavity. This design is suitable where the meter industry is putting water meter boxes in old properties and where pavements are established. It could be used on new sites but the problem with all new site work is that the vehicles of building contractors and others run over them causing breakages to the chamber. The whole unit can be broken in some instances.

Many Water Authorities are now preferring to stick to the old- fashioned sectional concrete box because it is strong and if knocked over can be rebuilt. These concrete boxes can vary in depth from 1 to 3ft (30-90cm) or more. Therefore to ensure that the meter can be kept at a readable depth I have designed an adjustable platform to support the meter manifold. The concrete boxes are preferably square but in certain areas a circular lay pipe is used. Thus in one aspect, the invention broadly provides an adjustable base platform shaped to suit either plastic pipe, circular clay pipe or the preferable square sectioned concrete boxes. It may also offer the option of fitting either a non ferrous valve and meter manifold or a plastic version as described in GB-A-2210465.

In a first aspect the invention provides an assembly for controlling and/or metering a fluid flow, said assembly being for mounting in a lined, vertically extending cavity, comprising: a base platform adapted to be mounted in said cavity at a selected intermediate location, by engagement with the cavity lining; the platform having two flow conduits extending through it; and a support or housing for controlling and/or metering means, said support or housing having a pair of downwardly opening flow conduits disposed so that the support or housing is mountable on the platform with respective flow conduits sealingly coupled in flow communication.

The support or housing may be a manifold that provides flow passages leading to and from a meter or meter attachment site, with valve means for controlling the flow, e.g. to permit removal of the meter. The flow conduits of the platform and support or housing may be arranged for telescopic connection.

The platform may engage the lining frictionally and/or by other means. For example it may be built in between courses of the lining, e.g. if this is a chamber constructed of concrete castings.

The support may be a plastics moulding to which a component, .e.g a meter, is connected and held by a locking ring engaging a thread of the support. For greater strength the thread may be provided by a metal insert which may be moulded in place.

The support or housing can be a self-contained unit, e.g. a simple loop for connecting the flowways of the platform, with means for preventing communication.

In a second aspect the invention provides a method of installing an assembly according to the first aspect which comprises providing a lined cavity with sand base platform mounted therein at a desired height by engagement with the lining; and coupling said support or housing to the platform.

In a third aspect the invention provides an assembly for controlling and/or metering a fluid flow, comprising a waterproof chamber containing controlling and/or metering means, flow conduits for the fluid passing sealingly through a wall of the chamber. This may include an assembly according to the first aspect, in which case the chamber may be closed at the bottom by said base platform. It is not always necessary to the platform to be within and connected to a lining. Thus in a fourth aspect the invention provides an assembly according to the third aspect mounted in a short lined cavity with surrounds only an upper portion of the assembly whose lower position extends into a cavity which may have been infilled.

An assembly according to the third and fourth embodiments may include a meter, and the chamber may have a transparent position (e.g. provided by a lid) through which the meter can be read. The assembly may also include a valve controllable from outside the chambers by means of a control element that extends sealingly through a wall of the chamber.

In a fifth aspect the invention provides a stop valve assembly having a flow conduit opening into a downstream chamber, and a valve spindle bearing one annular seal and being displaceable into the flow conduit to prevent flow along it. Fluid pressure within the conduit may then urge the seal radially outwardly to enhance its sealing contact with the flow conduit.

Fig.1 is a side view of an embodiment of the present invention comprising a plastic manifold substantially shown in GB-A-2210465 attached to an adjustable base platform, mounted in a concrete box.

Fig.2 shows an end view of the same plastic manifold attached to the adjustable base platform.

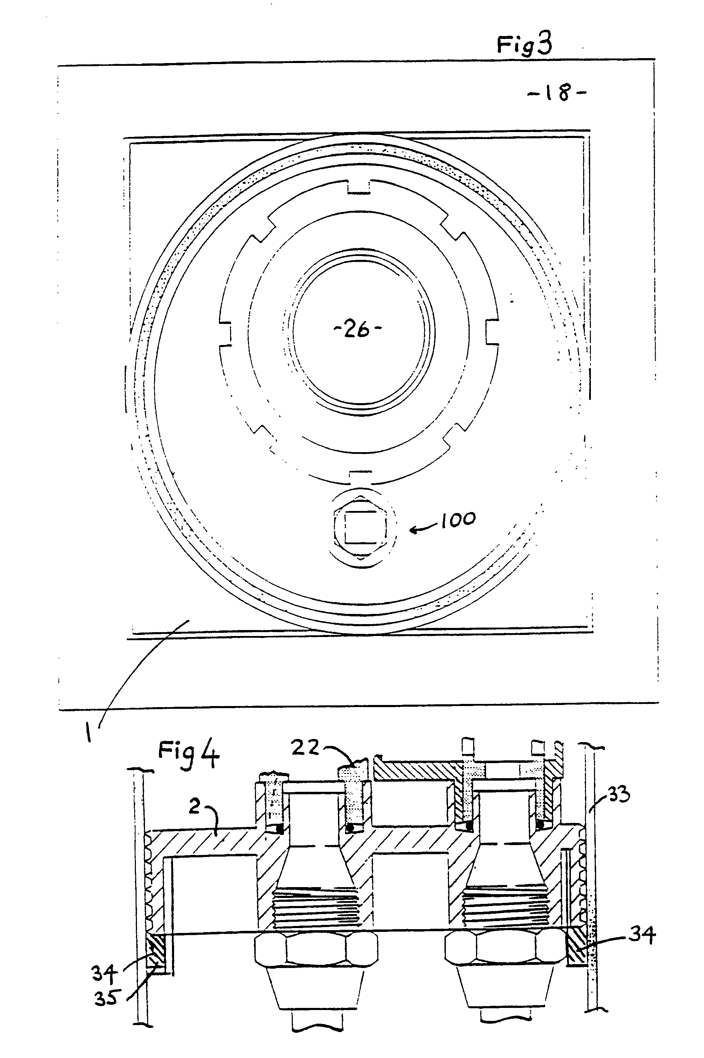

Fig.3 is a top view of the same unit.

Fig.4 shows a portion of Fig.1 but showing a modified base platform, the assembly being mounted in a plastic pipe.

Figs.5 and 6 show an assembly with a different form of manifold, Fig. 6 being a section on A-A in Fig. 5.

Fig.7 is a detail of Fig.1 showing a modified locking arrangement to the meter casing.

Fig.8 is a view like Fig.1 but showing another modification in the base platform.

Fig.9 shows a detail of an assembly and a tool for use in removing a manifold.

Figs.10 and 11 show another type of assembly with a simplified base platform carrying a stopcock assembly.

Fig.12 shows another type of assembly with a base platform carrying a flow loop.

Figs.13a and 13b show a modification to a flow way of Fig.1.

Fig.14 shows a modification to the manner of coupling a meter casing to an assembly generally as in Fig.1.

Fig.15 shows a modified valve spindle.

Fig. 16. shows the spindle of Fig.15 in an assembly generally as in Fig.1.

Fig. 17 shows a spindle guide ring from the Fig.16 assembly.

Fig. 18 shows another embodiment in vertical section.

Fig. 19 shows another embodiment: Fig. 19A in vertical section; Fig. 19B in side elevation; and Fig. 19C in top plan view.

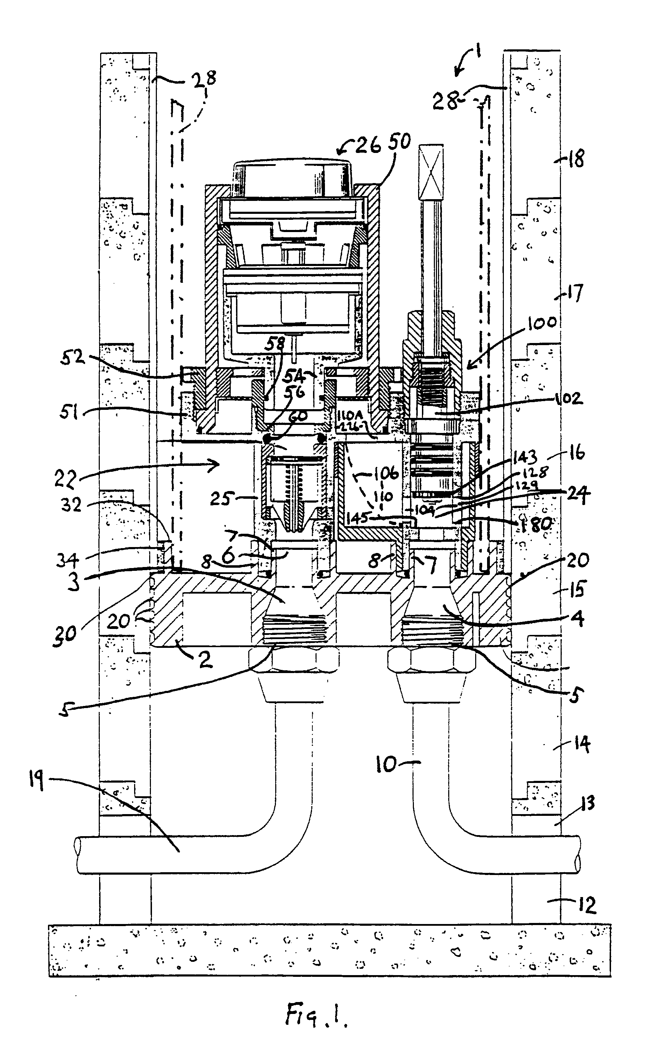

Fig. 1 shows a concrete casing which, in use, will be buried so as to constitute the lining of a cavity 1. At an intermediate region the cavity is bridged by a platform 2, which engages the lining. The platform has two vertically-extending through-ways 3, 4 whose lower openings 5 are adapted to be coupled to service pipes. The upper openings 6 are in upstanding projections 7 surrounded by annular flanges 8. The platform is adjustable as to vertical position. It may comprise plastics.

As shown in Fig.1 a water service pipe 10 (from a main) goes through a hole or slot 12 in the side of one of the sections 13 of a concrete box. It can be seen how the concrete sections are built up to form a chamber by adding the sections 14, 15, 16, 17 and 18. The water service pipe is connected to the inlet opening 5 of the adjustable base platform 2.

This section of the service pipe 1 may be pre-formed and longer than shown in Fig.1. It is cut to size and connected to the platform 2 by suitable means. An outlet pipe 19 is also cut to size and connected to the platform 2 by suitable means such as threading or welding at its other lower opening 5.

On the side of the platform 2 are serrations 20 or other means to enable the platform 2 to grip the chamber 1 and prevent it from moving once finally fixed to the service pipe 10. Prior to this fixing the platform is adjustable to any position within the chamber. These serrations or means of gripping can be manufactured as part of the platform or separately.

A manifold 22 is releasably mounted on the platform 2. It has a pair of downwardly projecting flow-ways 24, 25 that telescopically engage over the projections 7 of the platform, radially within the annular flanges 8. The manifold is fully described n GB-A-2 210 465, under the name 'meter support plate'.

The water flows from the service pipe 10 through an inlet 5 in the platform and then into the flow-way 24 of the manifold 22. It flows on through a meter 26 and the manifold 22 and back through the outlet 5 of the platform 2 and on through the outlet service pipe 19.

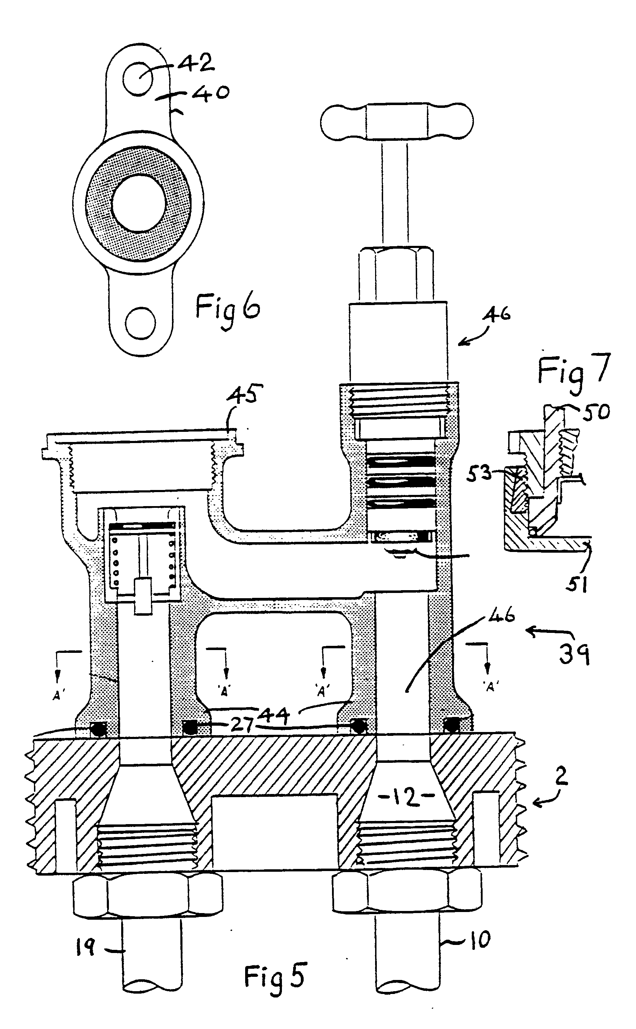

The manifold 14 has a recess for receiving a meter casing 50. The recess is delineated by an annular wall 51 having an internal thread. This engages a locking ring 52 for locking the casing 50 to it. However, the upward thrust on the casing 50 can be very great, e.g. equivalent to 1 tonne. Therefore if the manifold 22 is a plastics moulding, the threaded engagement of the wall 51 and ring 52 may not withstand the force. The thread of the wall 51 may therefore be provided by a moulded in metal insert 53 as shown in Fig. 7. Of course, this form of reinforcement is of wide applicability.

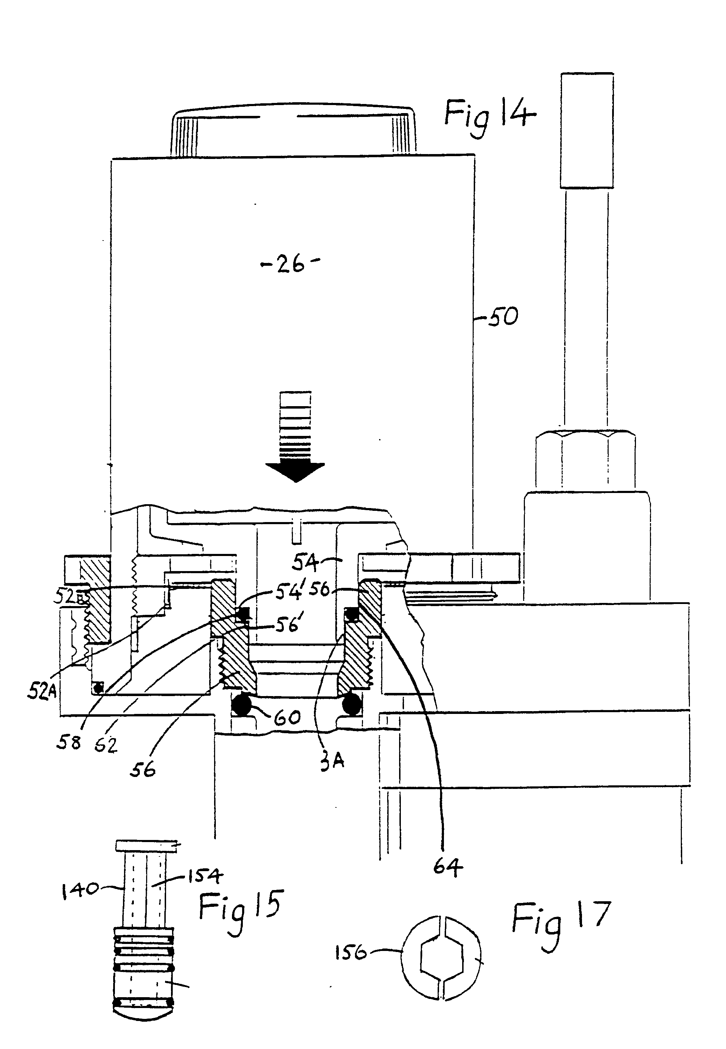

Fig.1 shows the meter to have a downwardly extending outlet 54 in telescopic engagement with a ring 56 which is screwed into the support plate 22 directly above the downward flow-way. For sealing there are an 'O' ring 58 in an annular groove in the outlet 54, and a second 'O' ring 60 beneath the ring 56. But I have now found that such a seal may sometimes be so effective than when the unit is pressurised the suction on the consumer's side is so great that it is very difficult to remove the meter from the manifold or support plate. The modification shown in Fig. 14 has an outlet 54 with a downwards facing shoulder 54' opposing an upwards facing shoulder 56' on the ring 56' on which the first 'O' ring 58 sits. The outlet 54 has been redesigned to have a preferably tapered end 62 which allows it to slide easily into the centre of the first 'O' ring 58. The seal is created by the taper diameter increasing as it enters the 'O' ring and pushes the 'O'ring against the inner wall 64 of the ring 56. Of course, this arrangement is widely applicable.

Another problem has arisen with the sealing of the meters after testing. It is necessary in the UK to seal the meters and this could apply in other countries.

Therefore I have decided to add a shoulder 52A to the meter locking ring 52. The shoulder can then be fixed by welding to the meter case 50, or by other suitable means. This ensures the locking ring cannot be removed without breaking the weld. The meter filter 52B can either be moved down or inset into the meter locking ring to enable it to be cleaned without dismantling the meter.

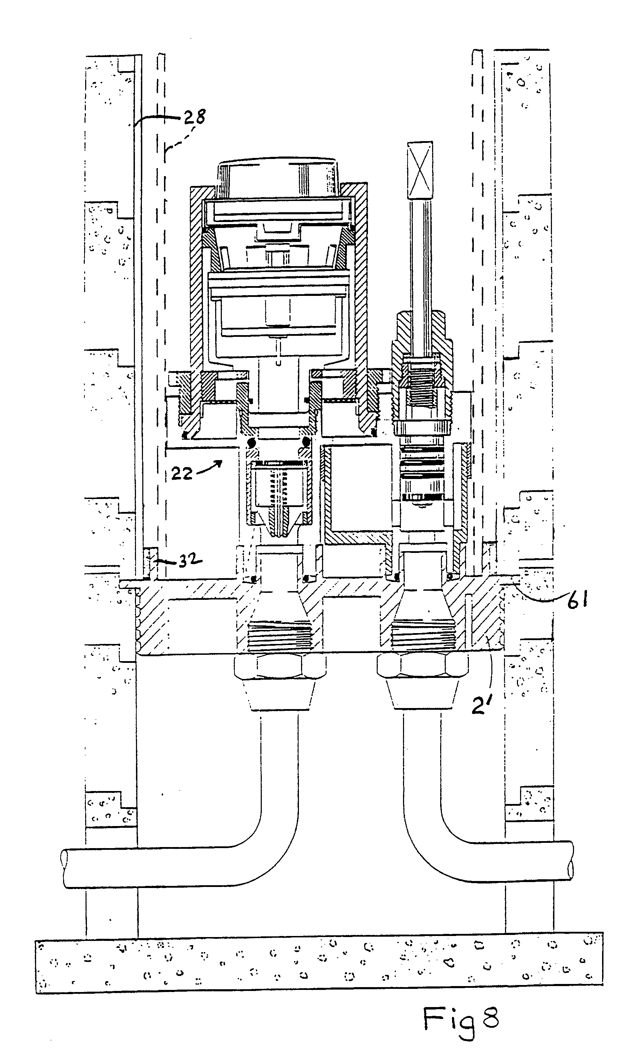

The baseplates on platforms 2 shown in Figs.1, 2, 4 and 5 have only serrations for gripping the lining. Fig.8. shows a platform 2' having a shoulder 61 projecting peripherally for engagement between concrete blocks. Thus it can, in effect, be built in, at a desired height.

It may be found that in certain areas, especially where there is a high water table, it is desirable to have a means of sealing the concrete or clay pipe chamber; to prevent water getting into the area where the meter 26 is located. This water would normally ingress via the holes 12 in the side of the concrete box or between the joints of the sections. After the assembly of the concrete chamber it is possible to ensure that the chamber is sealed by pushing a suitably sized plastic pipe 28 down inside the concrete chamber and allowing it to rest on the platform 2 at the point 30. This alone would not stop the ingress of water, so to ensure a tight seal there is a shoulder 32 radially spaced from the pipe 28. This gap is filled with a suitable sealing material 34 to provide a water tight seal. Also shown in Fig.1, in chain-dotted lines, is an alternative position for a plastic pipe 28 for defining a sealed chamber. This is radially within the shoulder 32 and sealing material 34, whose positions would be interchanged.

Fig.4 shows installation in a plastic chamber 33. Desirably, the seal 34 against ingress of water is generally beneath the outer periphery of the platform 2. A circular recess 35 may be defined to house it.

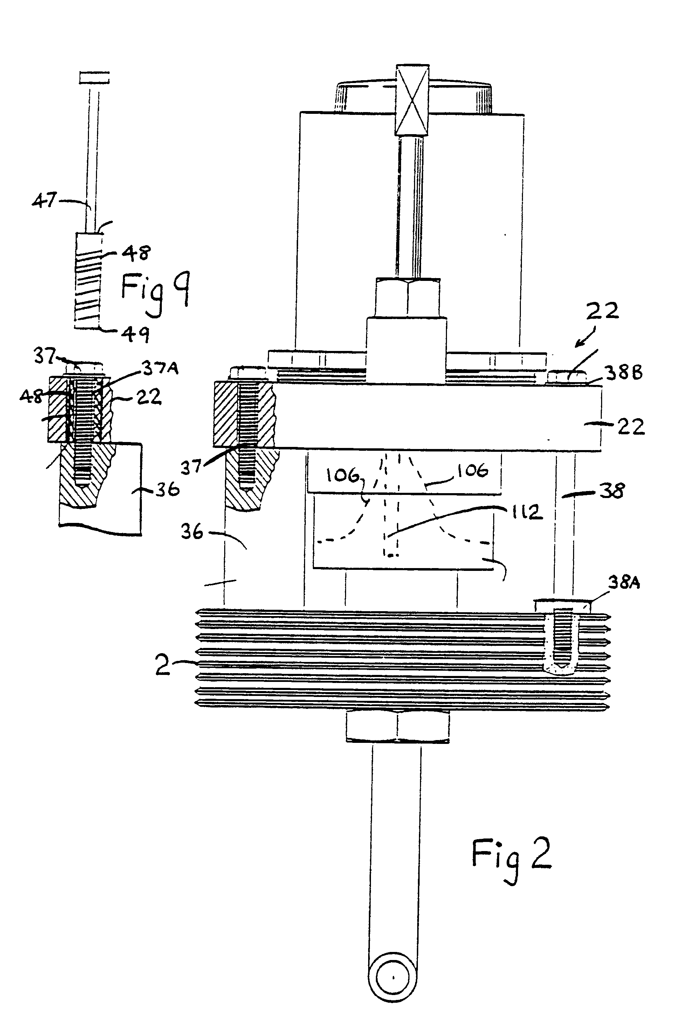

The platform 2 may have upstanding pillars 36 (fig 2) for supporting the manifold 22. This may be bolted to pillars via bolts 37. Alternatively, as shown at the right in Fig.2, long bolts 38 may extend to the body of the platform 2. A long bolt 38 may have a shoulder 38a for abutting the platform body to limit the stress applied to the manifold at 38B.

Fig. 9 shows a tool 47 for use in removing the manifold 22 from the platform 2. The manifold is slightly modified, in that the passageway 37A through which the bolt 37 passes is larger and receives an insert 48 having an internal thread complementary with an external thread 48 on an enlarged cylindrical end portion 49 of the tool. To remove the manifold, the bolts (37 or 38) are removed, and the tool is screwed into an insert 48 until it contacts the top of the pillar 36 continued screwing lifts the manifold off the platform.

Figs. 5 and 6 show how another version 39 of the valve and meter manifold can be fitted to the platform. This type is suitably manufactured in a non-ferrous metal material. It can be seen that it could be fitted to the adjustable platform 2 with a bracket or brackets 40 with one or more holding or fixing points 42. The bracket could also be a circular or other shaped plate. The inlet and outlet 44 of the manifold each have an '0' ring 27 in their end face in order to create a seal with the top of the platform 2. In use water flows from the main through the service pipe 10 and platform 2 into a flow-way 46 of the manifold 39. Thence it flows up through a meter that is usually positioned on a coupling 45; and then out through the outlet 44 and on to the consumer via the service pipe 19. There is a control valve 46 to shut off the water when necessary.

The adjustable platform enables the removal of the valve and meter manifold from the mounting without excavation.

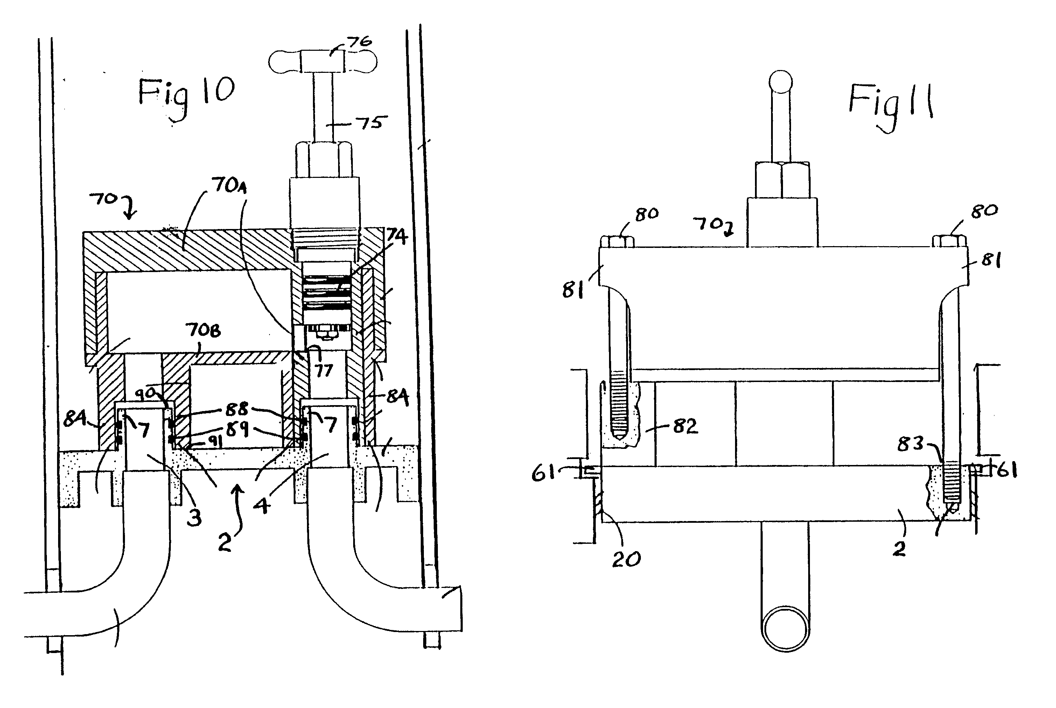

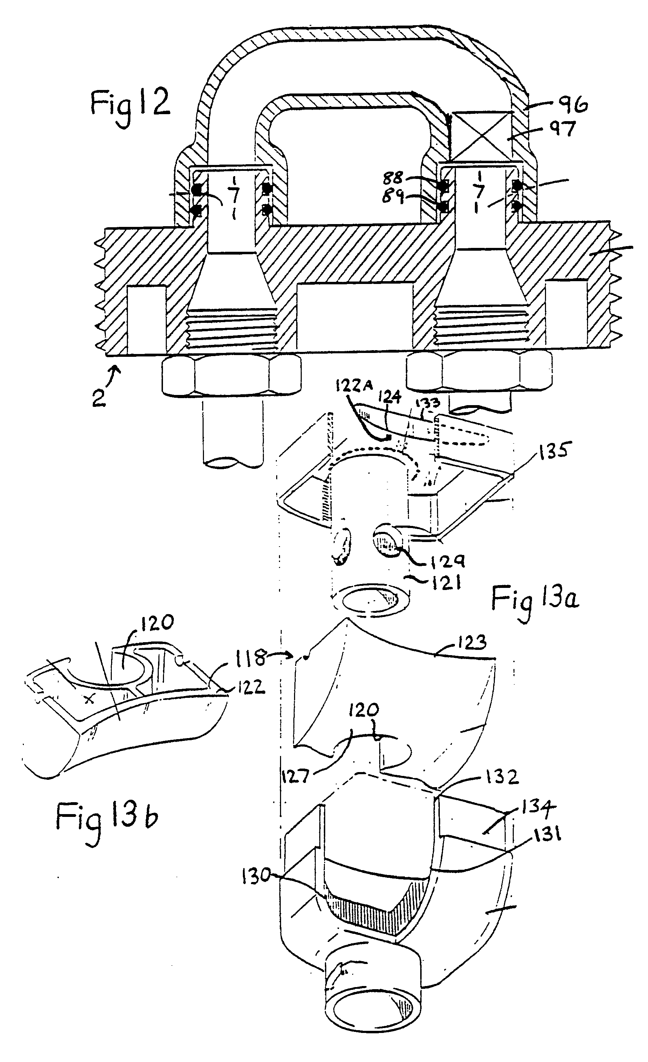

Figs. 10-12 show simpler embodiments of the invention in which the manifold carries or comprises flow control means but not necessarily a meter. Thus Figs. 10 and 11 show a platform 2 substantially as already described, secured at a desired height in a cavity by means such as solvent welding, screws, frictionally engaged serrations 20, and/or a peripheral shoulder 61. It has two flow conduits 3, 4. These are telescopically engaged by flow-ways of a stop valve assembly 70 which is preferably made of an injected moulded plastic. It is shown as two halves 70A, and 70B moulded as separate parts and fixed together by solvent welding, fusion welding or other suitable fixing method.

In the top section 70A there is a valve stem 74 which has a shut off spindle 75 to control the flow of water through the valve. To shut off the water you simply turn a handle 76 which drives the spindle 75 downwards towards the valve seat 77 and shuts off the water flow.

The valve assembly 70 is held onto the base plate 2 by one or more bolts 80 which are passed through a lug or lugs 81 which are part of the body sections 70A. B and fixed to a support pillar 82 or to the baseplate 2 at point 83. Other suitable fixings could be used. By unscrewing the bolts 80 from either the support pillar 82 or baseplate 2 without any special tools or excavation, the valve can easily be removed. The platform has two spigots 7 over which the bottom ends 84 of the valve 70 fit telescopically. There are '0' rings 88 and 89 positioned on the spigots which effect a seal between the valve body and the spigots. The '0' rings could be positioned at points 90 and 91 to form a compression seal if preferred.

Fig.12 shows a platform 2 bearing a temporary loop 96 which can have either a blank or a check valve 97. (This could be fitted into the inlet or the outlet of the platform 2 instead of being fitted into the loop 96 as illustrated.) The loop can be fitted by one or more bolts or other suitable fixing method to the platform 2. Should the consumer move into the premises before the roads or pavements are made up and finished correctly, the water supply can be connected up to the premises immediately by removing the blank or plug, or by turning the loop the opposite way around, which allows the water to flow through the check valve 97 to the consumer.

The platforms 2 shown in Figs. 10-12 have upstanding flow-ways 7 with annular cavities holding sealing rings 88, 89. They are engageable telescopically and sealingly by complementary flow-way openings of a manifold. This mode of connection can be used elsewhere. Thus an assembly generally as shown in Fig. 5 can have telescopic engagement of platform and manifold as shown in Fig. 12.

We shall now consider modifications affecting the flow ways. By way of example we shall consider these as applied to an assembly generally as shown in Fig.1, though they are of general applicability.

Fig. 1 shows two vertically extending flow ways 3, 4, 24, 25 each extending through the platform 2 and the support or manifold 22. The upward flow way 4, 24 is interruptable by a stop-cock 100 having a valve spindle 102 displaceable to prevent water from leaving via openings 104. Flute formations 106 may be provided as shown in broken lines in Figs. 1 and 2, such that water passing through the opening 104 into the chamber 110 is guided upwardly towards the meter cradle entry. If the valve stem has twin outlets, a central partition 112 (Fig.2) can be provided to reduce turbulence in the chamber 110 even more.

Fig.13 shows a flow guide 118 for reducing head loss in the chamber 110.

The principle of the flow guide 118 is that it has a shaped hole 120 to match the stem of the valve 121. It is mounted by suitable means of attachment either to the stem of the valve itself or by fixing the top edge 122 to the underside of the manifold 22 at 122A. This ensures that the leading edge 123 of the guide 118 matches the edge 110A of the flow way 110 into the meter cradle area 226 (see Fig. 1). The bottom edge 127 of the flow guide 118 sits in a position 128 above the valve outlet 129 of the valve stem 121.

The flow way is curved in the corners 130 of the base section to prevent sharp edges that could cause head loss. The front section 131 of the flow way is swept upwards so that the inside edge 132 is in line with edge 133 of the meter cradle flow way 24.

The top section 134 of the flow way is fitted to a shoulder 135 by suitable means such as fusion welding; or it could be fitted to the lower side of the manifold 22 with bolts or other suitable means.

When the flow guide is in position, it provides a channel which directs the water from the outlet 129 of the valve stem to the meter cradle flow way 24 with the minimum of head loss.

It would also be possible to mould the flow way guide 118 directly onto the underside but I have chosen to keep it separate. The manifold and all the components are normally manufactured in plastic but could be made in other suitable materials.

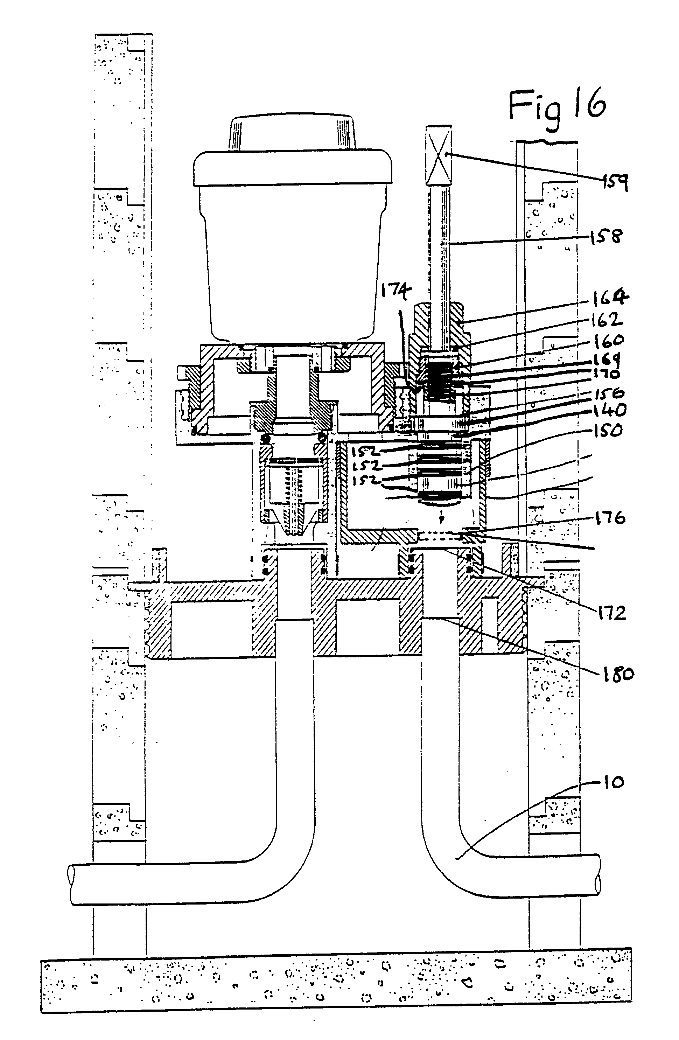

The valve spindle 102 shown in Fig.1 carries a washer 143 that is urgeable against a valve seat 145 to close off the flow way, Fig.15 shows a modified valve spindle 140, and Fig.16 shows its use in an assembly adapted from that shown in GB-A-2-210-465.

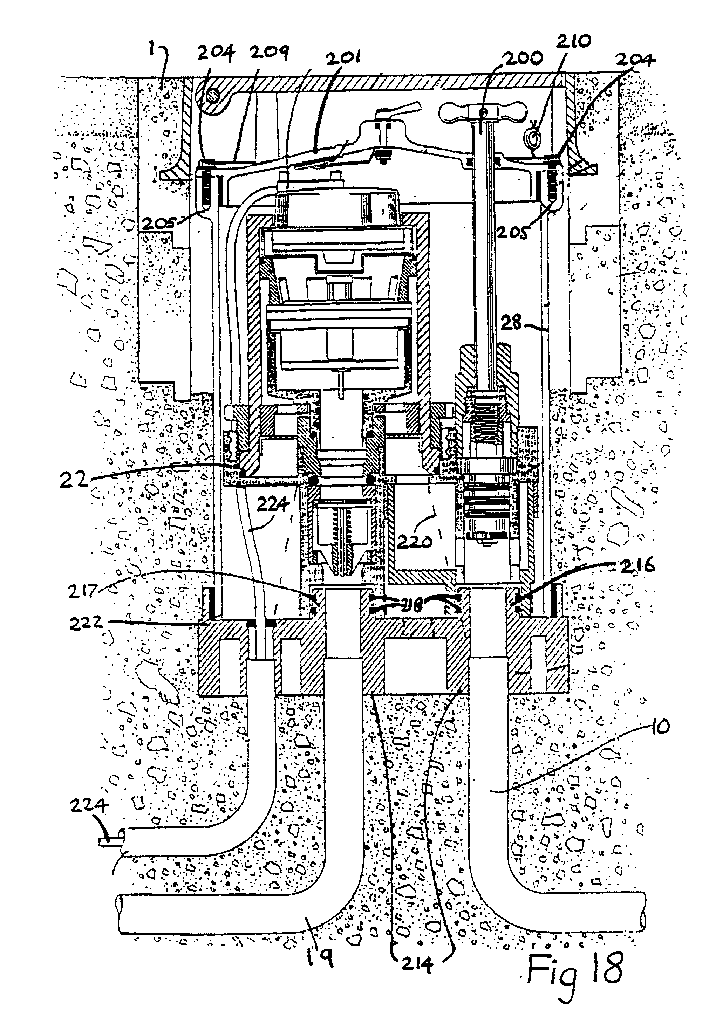

The valve spindle 140 is displaceable through the valve stem 150 It carries circular seals 152 and has a shank with flats, e.g. a hexagonal shank 154 which passes through a corresponding opening in a split guide ring 156 (Fig. 17). It is displaceable by means of a drive spindle 158 which is clamped by means of a lock nut 160, a backing washer 162 and headworks 164.

The principle of this design is that the spindle 140 travels a little further than in a conventional stop valve and uses an '0' ring seal, e.g. of rubber, to stem or control flow of fluid. This goes away from the present method of design where a seat washer is usually fitted on the end of a jumper and screwed down so that it covers the orifice or hole in the centre of the valve seat stopping the flow of water through the valve. It is the direct pressure of the seat washer over the hole which must be greater than the pressure of water coming in which prevents the water flowing through the valve and the pressure will inevitably create wear on the washer and seat.

This can also be a problem to elderly people or invalids who may not have the power in their limbs to apply the pressure to stop the flow completely in an emergency. The oversized jumper and washer also prevents the jumper being overturned and coming off the end of the spindle. But with my new design, the pressure in the service pipe is used to create the seal, and this reduces the power required to turn the water off to a minimum.

To operate the valve, one turns the drive spindle 158 (via a handle 159). The drive spindle has a thread 169 which matches a thread 170 inside the valve spindle 140 which is therefore pushed downwards. The lowest seal 152 on the valve spindle 140 enters the opening 176 through which the fluid is entering the valve flow way chamber. Fluid flow into the chamber is prevented when the seal or '0' ring reaches the position shown in broken lines. (It would also be possible to extend the length of the valve spindle 140 to create a seal in the spigot 172 or to extend the height of the inlet pipe 10 at point 180 up to position 172). When in position the pressure opens up the seal 152 and stops the flow of water or fluid. The valve spindle 140 is prevented from travelling any further than position 176 by a shoulder 174 on the top of the valve spindle which abuts the top of the split guide 156. Because the spindle is of the same diameter or larger than the bore of the pipe it ensures that when oversize pipes are used there is only the minimum amount of head loss.

The split guide 156 is an important feature as it assists the assembly.

The shoulder on the spindle can be put at a lower points if preferred, to prevent overwinding.

The valve body is a different design to the one shown in Fig.1 and in my application G8-A-2.210.465. In the previous design the stem extended fully through the flow way 24 to the point 180 where it was attached to the flow way, lateral apertures being provided to permit flow into the chamber. This design limited the size of the flow way that could be used. The present design, with the shorter stem and the modified spindle, increases the size of the flow way at point 180 thus reducing the head loss.

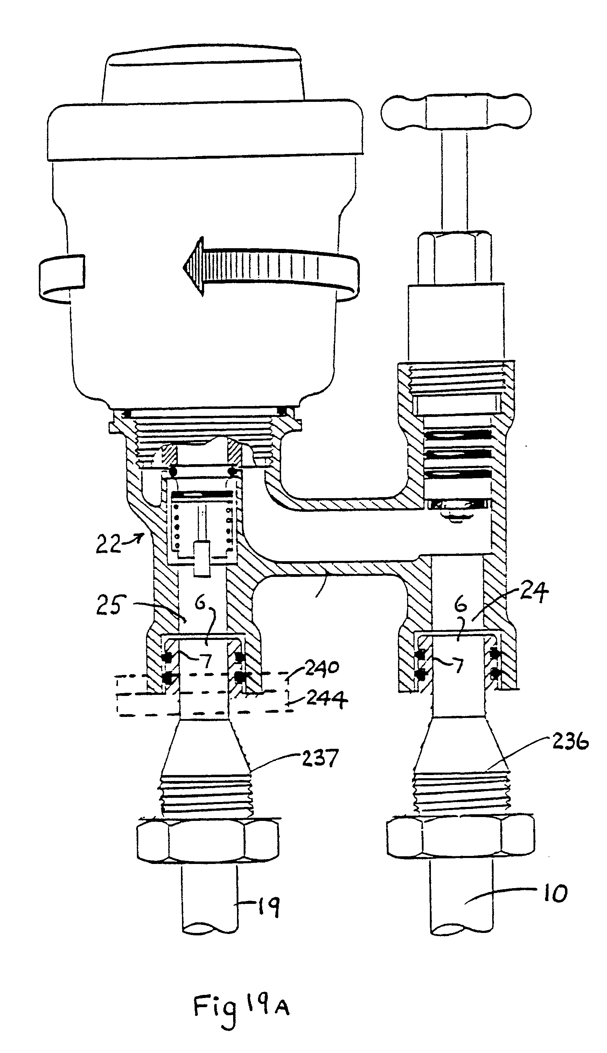

Fig 1 shows a plastic pipe 28 sealed to the platform 2 and extending upwardly to surround the meter etc. This may be used to form a waterproof inner chamber, as shown in Fig. 18. Thus the pipe 28 bears a lid 201 which is transparent, at least in part, so that the meter can be read through it. Desirably the operating shaft 200 for the valve extends sealingly through the lid. The meter may be adapted to be read by telemetry. Thus an electrical output cable 224 is led out through a sealed opening in the platform 222. The presence of electrical components increases the importance of maintaining a dry, sealed inner chamber. Another reason for this is to prevent persons from tampering with the meter. Thus the lid may be sealed down. Suitably it is held down by bolts 204 engaged in lugs 205 at the top of the pipe 28. Sealing wire 209 passes through openings in the bolts 204 and its ends are sealed with a lead seal 210.

Another feature of Fig.18 is that it shows an assembly mounted only partly within a lining (concrete casing 1).

It is not always possible to use the full amount of concrete blocks to install a meter box or stop cock box due to the conglomeration of service pipes and cables below pavements in urban areas. Therefore this baseplate 222 is designed to be used as a free standing unit which rests independently on the inlet and outlet pipes 10, 19 prior to back filling.

The inlet pipe 10 and the outlet pipe 19 are connected to the service pipe (not shown) at one end and to the baseplate 222 at the other end. The pipes 10, 19 are fitted by fusion welding or other suitable means to lugs 214 on the baseplate.

The baseplate 222 may, as shown, have two other spigots 216, 217 with one or more seals 218 that allow a meter manifold 22 or a temporary by pass (not shown) to be attached. There would preferably be one or more pillars (dotted line 220) or supports to hold the manifold 22 in position. There would also preferably be one or more bolt holes or other means of holding a gun metal type manifold as previously described.

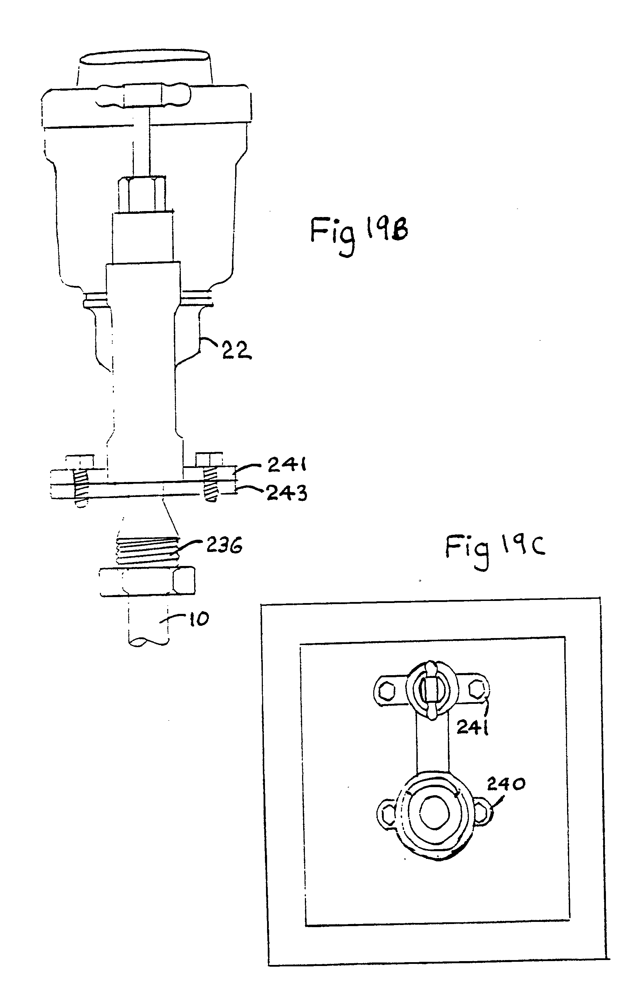

Fig. 19 shows a variant manifold platform assembly in which the 'platform' is constituted by two support fittings 236, 237 mounted on the inlet and outlet pipes 10, 19. They provide upper openings 6 in projecting portions 7 which are telescopically received in downwardly projecting flow-ways 24, 25 of the manifold 22. (The connection of the flowways is like that shown in Fig. 12, though of course other types are possible). For connecting the manifold 22 securely but releasably to the support fittings 236, 237 there may be a pair of flanges 240, 241 on the manifold that overlie corresponding flanges 43, 44 on the fittings 236, 237 and are bolted or otherwise secured thereto.

## Claims

1. An assembly for controlling and/or metering a fluid flow, said assembly being for mounting in a lined, vertically extending cavity, comprising: a base platform adapted to be mounted in said cavity at a selected intermediate location, by engagement with the cavity lining; the platform having two flow conduits extending through it; and a support or housing for controlling and/or metering means, said support or housing having a pair of downwardly opening flow conduits disposed so that the support or housing is mountable on the platform with respective flow conduits sealingly coupled in flow communication.

2. An assembly according to claim 1 wherein said flow conduits of the platform are provided at the upper side by upstanding flow-ways. said flow conduits of the support or housing comprise downwardly extending flow-ways; and respective flow-ways of the platform and support or housing are telescopically engageable.

3. An assembly according to any preceding claim wherein the platform has peripheral serrations for gripping the lining.

4. An assembly according to any preceding claim wherein the platform has an upstanding annular flange closely spaced from its periphery so that a pipe can stand on the platform with its lower mouth sealingly engaged between the flange and the lining.

5. An assembly according to any preceding claim wherein the platform has a peripheral seal for sealing to the lining.

6. An assembly according to claim 5 wherein the platform has a downwardly extending annular formation defining a seal housing cavity for said peripheral seal.

7. An assembly according to any preceding claim wherein the platform has a peripheral shoulder for engagement between concrete blocks of a concrete lining.

8. A method of installing an assembly according to any preceding claim which comprises providing a lined cavity with said base platform mounted therein at a desired height by engagement with the lining; and coupling said support or housing to the platform.

9. An assembly for controlling and/or metering a fluid flow, comprising a waterproof chamber containing controlling and/or metering means, flow conduits for the fluid passing sealingly through a wall of the chamber.

10. An assembly according to claim 9 including a meter, the chamber being partly transparent to permit the meter to be read.

11. An assembly according to claim 9 or 10 including a valve having a control spindle which extends sealingly through a wall of the chamber to permit operation of the valve from outside the chamber.

12. An assembly according to claim 9, 10 or 11 including an assembly according to any of claims 1-7.

13. An assembly according to claim 12 wherein said waterproof chamber is closed at the bottom by said base platform.

14. An assembly according to claim 9, 10 or 11 wherein the controlling and/or metering means comprises a base platform having two flow conduits extending through it; and a support or housing for controlling and/or metering means, said support or housing having a pair of downwardly opening flow conduits disposed so that the support or housing is mountable on the platform with respective flow conduits sealingly coupled in flow communication.

15. An assembly according to claim 14 wherein said flow conduits of the platform are provided at the upper side by upstanding flow-ways, said flow conduits of the support or housing comprise downwardly extending flow-ways; and respective flow-ways of the platform and support or housing are telescopically engageable.

16. An assembly according to claim 14 or 15 wherein the platform has an upstanding annular flange closely spaced from its periphery so that a pipe can stand on the platform with its lower mouth sealingly engaged between the flange and the lining.

17. An assembly according to claim 14-16 including a cavity in which the assembly is mounted, said cavity having a lining only in an upper r3egion, said platform being in an unlined region

Fig. 1.

Fig 9

Fig 2

Fig 3

-18-

-26-

← 100

Fig 4

22

2

33

34

34
35

Fig 6

Fig 7

Fig 5

Fig 8

Fig 10

Fig 11

EP 0 446 507 A1

Fig 12

Fig 13a

Fig 13b

Fig 14

-26-

-50

54

54' 56

52B

56'

52A

52A

58  62

56

60

3A

64

140 —154

Fig 15

156

Fig 17

Fig 16

Fig 18

Fig 19A

Fig 19B

22

241

243

236

10

Fig 19C

241

240

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 327 972 (GLYNWED TUBES & FITTINGS LTD) * Column 3, lines 6-22; column 10, line 54 - column 11, line 3; figures 3,4,10 * | 1,3,5,8 | G 01 F 15/18 |
| A | | 2 | |
| X | US-A-3 961 528 (FORD) * Column 3, line 28 - column 4, line 47; figures 2-5 * | 1,8 | |
| D,A | EP-A-0 317 061 (G.J. EVANS) * Figures * | 1,2 | |

TECHNICAL FIELDS SEARCHED (Int. Cl.5)

G 01 F

~~The present search report has been drawn up for all claims~~

| Place of search | Date of completion of the search | Examiner |
|---|---|---|
| THE HAGUE | 31-10-1990 | ROSE A.R.P. |

European Patent
Office

---

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

---

| X | ## LACK OF UNITY OF INVENTION |

The Search Division considers that the present European patent application does not comply with the requirement of unity of invention and relates to several inventions or groups of inventions,
namely:


See sheet -B-


☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

namely claims: 1-8

## LACK OF UNITY OF INVENTION

The Search Division considers that the present European patent application does not comply with the requirement of unity of invention and relates to several inventions or groups of inventions, namely:

1. Claims 1-8: Mounting of meter support on a platform which is mounted in a lined cavity.

2. Claims 9-17: Waterproof chamber for meter.